# EUROPEAN PATENT SPECIFICATION

(11) **EP 2 107 195 B1**
(45) Date of publication and mention of the grant of the patent: **10.08.2011**
(21) Application number: 09396004.5
(22) Date of filing: 31.03.2009
(51) Int. Cl.: E05C 19/14, B62D 33/037

(54) **Toggle latch**
Kniegelenkverschluss
Fermeture à genouillère

(30) Priority: 31.03.2008 FI 20080258; 19.06.2008 FI 20080412
(43) Date of publication of application: 07.10.2009
(73) Proprietor: Voutilainen, Mikko, 20320 Turku (FI); Kuronen, Toni, 23100 Mynämäki (FI)
(72) Inventor: Voutilainen, Mikko, 20320 Turku (FI); Kuronen, Toni, 23100 Mynämäki (FI)
(74) Representative: Pirhonen, Kari Lennart

(56) References cited:
- DE-A1-102006 043 583
- DE-U1- 9 211 946
- DE-U1- 29 720 581
- RU-C1- 2 081 984
- US-A- 5 667 261
- US-A- 5 924 616

## Description

### OBJECT OF THE INVENTION

The object of the invention is a toggle latch, openable by hand, by means of which two parts, such as a casing cover and a casing body, cargo pallet sidewalls, or similar objects can be latched together, the toggle latch comprising
- a body of the toggle latch to be connected to the first part to be latched, the body most preferably including an adjustable eye bolt or a similar arrangement,
- a counterpiece to be connected to the other part to be latched, such as a hook or a similar arrangement,
- a latch lever connected to the body of the toggle latch and to the eye bolt, which lever, by being turned, can latch the eye bolt with the counterpiece, and
- a securing aperture located in the body of the toggle latch, a securing pin being located in the said aperture to prevent the latch lever from turning and thus also the toggle latch from releasing.

### PRIOR ART

Known toggle latches (see document DE-A-10 2006 043583) include types used in vehicles, which help to secure a trailer cover or a hatch or trailer sidewalls, for example. As vehicles vibrate during travel and may also be subjected to impacts due to uneven roads, there is always a risk of such locking devices releasing spontaneously. The latch lever of a toggle latch must therefore always be secured with a securing pin. Using such pins is awkward, however, because, first of all, the required securing pins need to be stored safely. Thus the pins may easily be misplaced, in which case they are not available when needed. Secondly, installing a pin when latching the device and also removing the pin when releasing the toggle latch is an awkward operation requiring both hands.

### PURPOSE OF THE INVENTION

The purpose of the present invention is to create a novel toggle latch, which is easier to use and which overcomes the above-mentioned drawbacks.

### CHARACTERISTICS OF THE INVENTION

A toggle latch according to the invention is characterised in that
- the latch lever of the toggle latch has a securing pin and a spring, the spring force of which spring is directed at the securing pin to move it axially so that, in the latched position of the toggle latch, the securing pin secures the latch lever in the securing aperture of the body of the toggle latch, and
- there is an inclined surface on the body of the toggle latch, the inclined surface being arranged so that, when the latch lever is turned to the latched position, the inclined surface moves the securing pin against the spring force of the spring and guides the securing pin into the securing aperture of the body.

Such a toggle latch according to the invention always includes a securing pin, and the pin cannot be misplaced. A spring-loaded securing pin also cannot be spontaneously released, as a result of vibration for example. The latch can be released simply by moving the securing pin against the spring force of the spring. Perhaps the most important characteristic of a toggle latch according to the invention is, however, that the latch can never be left unsecured. Due to its design, the toggle latch cannot be latched unless the latch is simultaneously also secured by means of the securing pin structurally incorporated in it.

Toggle latches with highly functional security and ease of use are in particularly high demand in the oil industry, including oil refineries or drilling platforms. These installations include many different types of pipe connections and related valves, which require securing by toggle latches allowing easy latching and releasing. Because such valves are in many cases large and connected to complex piping systems with several branches, also valve housing covers are often large and have complex shapes. Large, sealed, and thermally isolated covers are often divided into several parts. A valve housing cover may for example consist of four parts, each of which is usually latched to the housing with two toggle latches made from a durable material, such as acid-proof steel.

According to oil industry safety regulations, toggle latches always need to be secured with a securing pin so that the toggle latches and valve housing covers cannot open accidentally. Highly difficult conditions are a problem specific to oil refineries or oil drilling platforms. Furthermore, housings and their latches are often located in very difficult places, such as a grate decking high up off the ground. When working at such a location, the securing pins of a toggle latch can easily fall and be lost.

In difficult working conditions, a toggle latch may also remain unsecured due to a lapse of memory or the securing may be omitted for some another reason. One way to prevent the securing pins being lost is to attach them to the toggle latch by a wire or a chain, for example. Such a solution is not very practical, however. Additional wires or chains may become tangled and pose a serious safety risk to the personnel.

### EMBODIMENTS OF THE INVENTION

A preferred embodiment of the toggle latch according to the invention is characterised in that
- the securing pin is U-shaped and most preferably made from round steel bar, and
- the spring is a coil spring located around the securing pin and secured to the securing pin.

The U-shaped securing pin is most preferable because both arms of the pin can be located in apertures of the latch lever, whereby the arms in the latch lever apertures properly support the latch lever in place and the movement of the pin is well controlled. This creates a type of double support. The securing pin is also conveniently situated in connection with the latch lever, substantially inside of it, whereby the securing of the pin and releasing of the secured pin can be conveniently carried out simultaneously with the gripping of the latch lever to secure or release it.

Another preferred embodiment of the toggle latch according to the invention is characterised in that
- the U-shaped securing pin is located in the latch lever apertures so that the ends of both its arms protrude on the same side of the latch lever, and
- to release the secured latch lever, the securing pin can be moved to the side by pressing its first arm, i.e. the movable portion, against the spring force of the coil spring, whereby the other arm of the securing pin, i.e. the securing portion, is pushed out of the securing aperture of the body.

In connection with the latch lever, the securing pin can also be easily used and moved during the latching and releasing of the toggle latch, even with one hand.

A third preferred embodiment of the toggle latch according to the invention is characterised in that the coil spring is secured to the securing location of the securing pin, the securing location being a securing groove or a protrusion made by pressing. The spring can be secured in other ways as well, for example with a flange. A groove or a protrusion allow easy manufacturing, however.

A fourth preferred embodiment of the toggle latch according to the invention is characterised in that the toggle latch and its U-shaped securing pin are made from stainless steel or acid-proof steel. Thus a toggle latch according to the invention can be used in demanding conditions, including the oil industry or food industry, for example.

A fifth preferred embodiment of the toggle latch according to the invention is characterised in that the body of the toggle latch has a protrusion equipped with a securing aperture, the protrusion being shaped in such a way that, when the latch lever is being latched, the securing pin makes contact with the protrusion and the protrusion guides the securing pin so that the pin is secured in the securing aperture of the protrusion.

A fifth preferred embodiment of the toggle latch according to the invention is characterised in that the securing pin equipped with a coil spring can, during assembly, be slipped into the first aperture of the latch lever and, after that, it can be turned into the other aperture of the latch lever.

A sixth preferred embodiment of the toggle latch according to the invention is characterised in that the securing pin is equipped with a securing member by which the securing pin can be secured so as to be immobile. This securing member can be any mechanical latch, pin or pressing member. However, most preferably it is a nut with a roughened surface so that the nut can be turned by hand. The nut can be turned on a thread arranged on the securing pin so that the securing pin becomes secured and immobile.

### EXAMPLES OF EMBODIMENTS

In the following, the invention is described using examples with reference to the appended drawings, in which

### LIST OF FIGURES

- Figure 1: shows a perspective view of a toggle latch according to the invention with the latch released.
- Figure 2: corresponds to Fig. 1 and shows a perspective view of the initial phase of the toggle latch being latched.
- Figure 3: shows a top view of the toggle latch in Fig. 1 with the securing pin pressed to the side.
- Figure 4: corresponds to Fig. 3 and shows a top view of the toggle latch with the securing pin in the latched position.
- Figure 5: shows a perspective view of the toggle latch in Fig. 4 with the securing pin the latched position.
- Figure 6: shows a magnified detail from Fig. 3.
- Figure 7: shows a detail of a toggle latch according to another embodiment of the invention.
- Figure 8: corresponds to Fig. 7 and shows the latch lever of the toggle latch in another position.
- Figure 9: corresponds to Fig. 7 and shows the latch lever of the toggle latch in a third position.
- Figure 10: shows a schematic view of the securing pin of the toggle latch being installed.
- Figure 11: corresponds to Fig. 8 and shows a third embodiment of the toggle latch being latched.
- Figure 12: shows the toggle latch in Fig. 11 in the latched position.
- Figure 13: shows the toggle latch in Fig. 11, the latching being secured.

### DESCRIPTION OF THE FIGURES

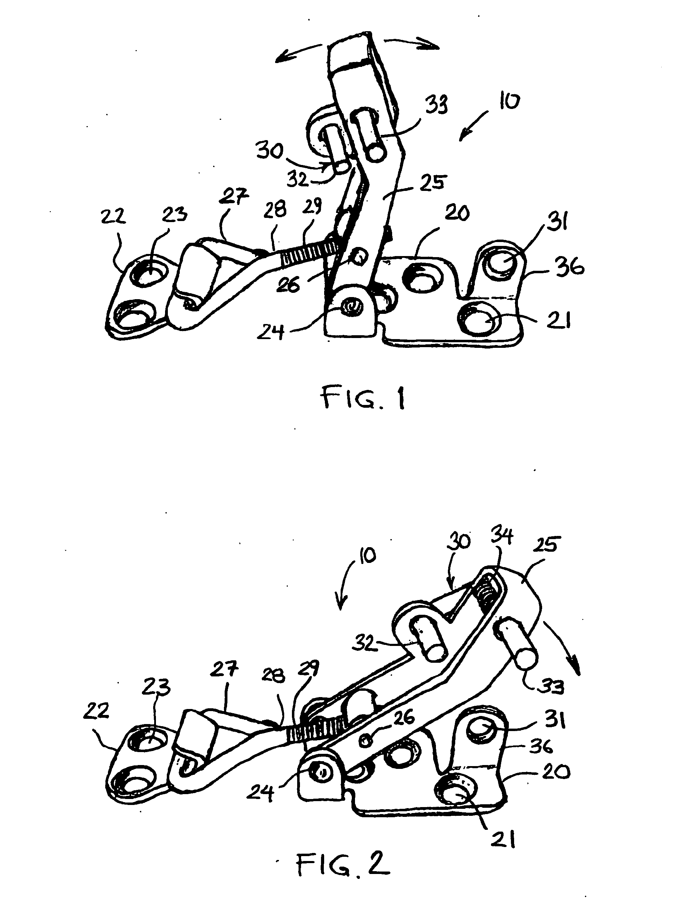

Figure 1 shows a perspective view of a toggle latch 10 according to the invention, the toggle latch including a body 20 intended to be attached to the first part to be latched via screw holes 21. A counterpiece 22 attached to the other, i.e. opposite part to be latched is hook-shaped in the embodiment of Fig. 1 and is also attached by means of screw holes 23. Parts to be latched by the toggle latch 10 shown here may include the body of a casing and the cover of the same casing, for example. A latch lever 25 is connected to the body 20 of the toggle latch 10 in Fig. 1 so that it can be turned by means of joints 24. An eye bolt 27 is attached to the axle 26 located in the latch lever 25, the eye bolt having threads 29 on its shaft 28 to set the tightness of the latching. When the toggle latch 10 is latched, the latch lever 25 is turned clock-wise against the body 20 shown in Fig. 1.

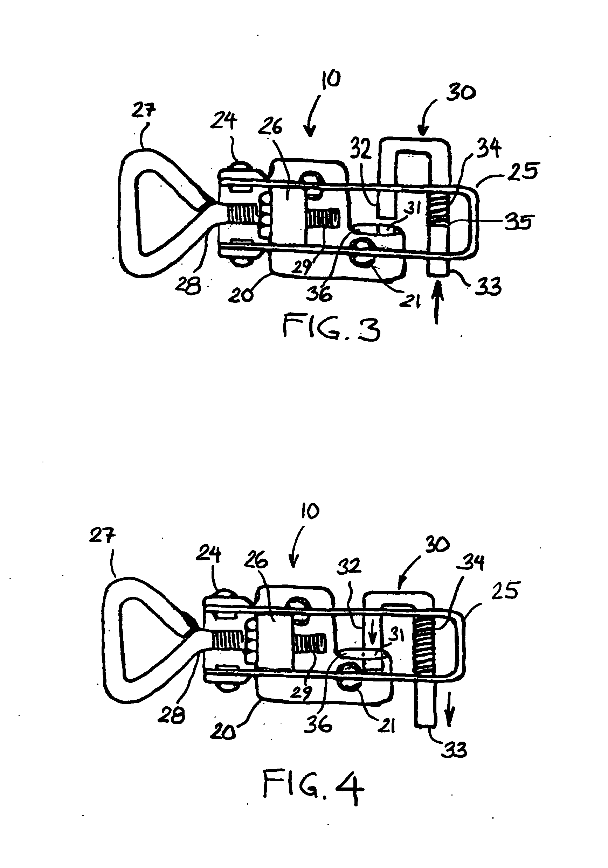

In terms of its structure and functioning, the toggle latch 10 in Fig. 1 in part corresponds to as such known toggle latches. It is essential and different in the toggle latch 10 of Fig. 1, however, that a securing pin 30 is attached to its latch lever 25; the securing pin can be secured in a securing aperture 31 located in a protrusion 36 in the body 20 of the toggle latch 10, as described in greater detail in connection with Figures 3 through to 6.

In Figure 2, the latch lever 25 of the toggle latch 10 is turned nearly to its latched position. To be able to turn the latch lever 25 to its terminal position, the securing portion 32 of the securing pin 30 must be moved laterally. This is carried out by pressing the end of the movable portion 33 of the securing pin 30 in the direction of the axle, as presented in Fig. 3.

In Figure 3, the securing pin 30 of the toggle latch 10 is moved laterally by pressing the end of the movable portion 33 of the securing pin 30 in the direction indicated by the arrow, i.e. upwards in Fig. 3, against the spring force of a spring 34 attached to the securing pin 30. Fig. 3 shows that the securing portion 32 of the securing pin 30 has then moved so far to the side that the latch lever 25 can be pressed downwards all the way into the latched position, without the securing portion 32 preventing this.

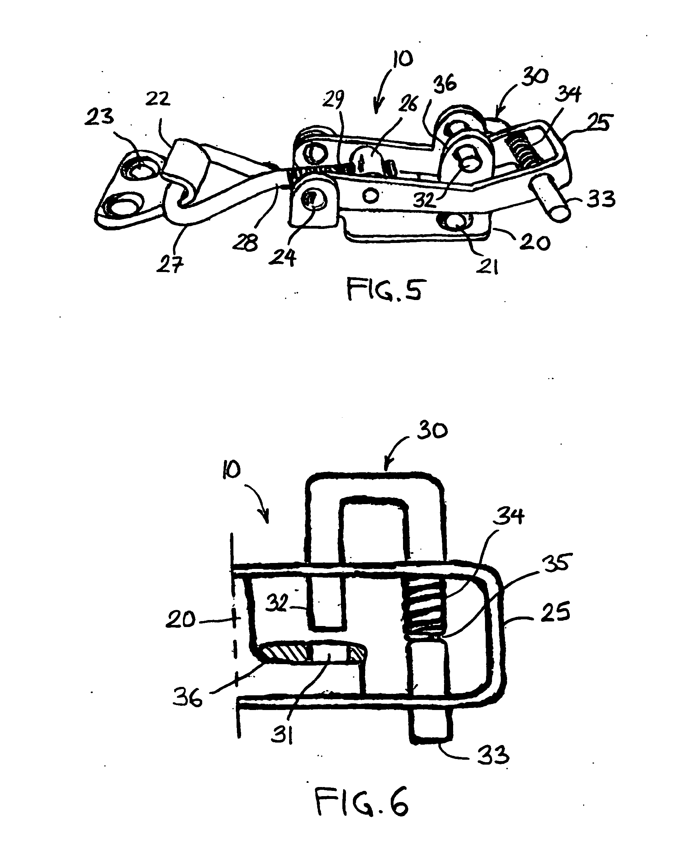

Figure 4 shows a situation in which the latch lever 25 of the toggle latch 10 is pressed into the latched position. When the lateral pressing of the movable portion 33 of the securing pin 30 is simultaneously stopped, the spring 34 returns the securing pin 30 in the direction indicated by the arrow, i.e. downwards in Fig. 4. The securing portion 32 of the securing pin 30 then enters the securing aperture 31 located in the protrusion 36 of the body 20, and it is therefore ensured that the lever 25 of the toggle latch 10 remains in the latched position by means of the securing pin 30. Figure 5 shows a perspective view of the toggle latch 10 of Fig. 4 in the latched position.

Figure 6 shows in greater detail the structure of the securing pin 30 of the toggle latch 10 in the position shown in Fig. 3. Fig. 6 shows that the securing pin 30 has been moved to the side by pressing the end of the movable portion 33 of the securing pin 30 in the direction of the axle. Thus also the securing portion 32 of the securing pin 30 has moved so far to the side that it does not meet the protrusion 36 of the body 20. Simultaneously, however, also the spring 34 located around the movable portion 33 is pressed against a wall of the lever 25. In this embodiment, the securing location 35 in the spring 34 of the movable portion 33 is a groove, to which the other end of the spring 34 is secured.

Now, when the grip on the movable portion 33 of the securing pin 30 is released, the securing pin 30 moves downwards in Fig. 6 as a result of the spring's 34 spring force, whereby the securing portion 32 of the securing pin 30 also goes into the securing aperture 31 in the protrusion 36 of the body 20. Thus, by means of the securing pin 30, it is ensured that the lever 25 of the toggle latch 10 remains in the latched position.

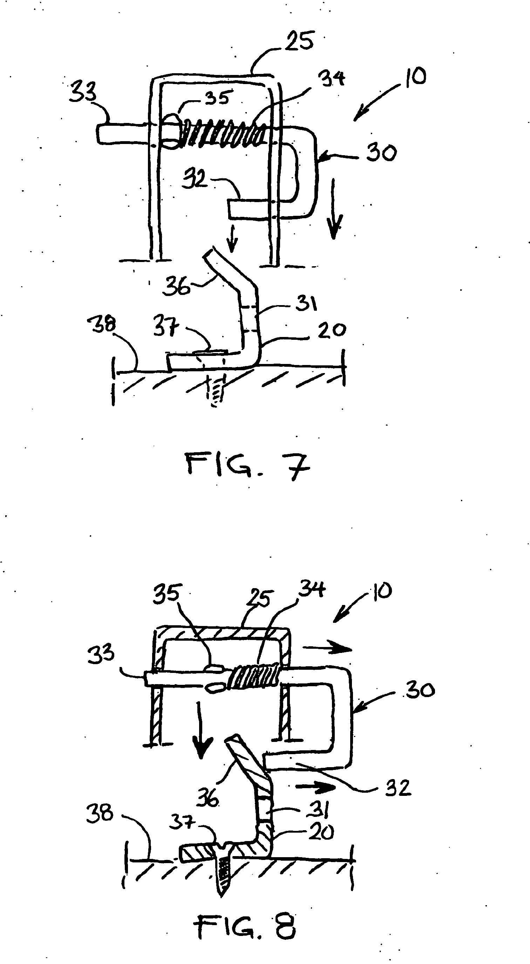

Figure 7 shows a detail of the toggle latch 10 according to another embodiment. The body 20 of the toggle latch 10, attached to the part to be latched 38 by a screw 37, is for the sake of illustration simplified in Fig. 7 so that only a protrusion 36 and its securing aperture 31 are shown. The latch lever 25 is also not shown in its entirety. In the embodiment in Fig. 7, the protrusion 36 is shaped differently so that its end is in an inclined position. When the latch lever 25 is latched, i.e. pressed downwards in Fig. 7, the other end of the securing pin 30, i.e. the securing portion 32 makes contact with the latch lever.

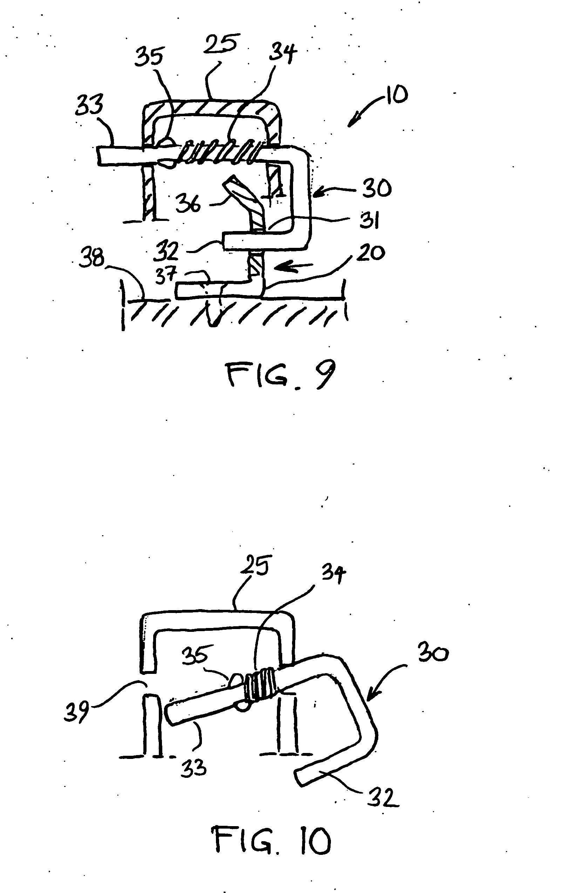

Figure 8 shows that, when the latch lever 25 is pressed further downwards, the inclined portion of the protrusion 36 pushes the securing pin 30 to the right in Fig. 8. Simultaneously, the spring 34 of the securing pin 30 becomes compressed. The securing portion 32 of the securing pin 30 thereby slides downwards along the surface of the protrusion 36. When the securing portion 32 reaches the securing aperture 31 of the protrusion 36, it is pushed into the securing aperture 31 by the force of the spring 34, as shown in Figure 9. Thus the toggle latch 10 is latched and the latching has also been automatically secured.

Figure 10 shows the securing pin 30 of a toggle latch 10 being installed according to a specific embodiment. The securing pin 30 is bent from a round steel bar in such a manner that the bending angles are not very acute. Also the apertures in the latch lever 25 can be made slightly oversized so that the securing pin 30 equipped with a spring coil 34 can be slipped into the apertures from the inside, the securing portion 32 first. When the securing pin 30 is in the position shown in Fig. 10 one only has to move its opposite end, i.e. the movable portion 33, into the aperture 39 in the latch lever 25.

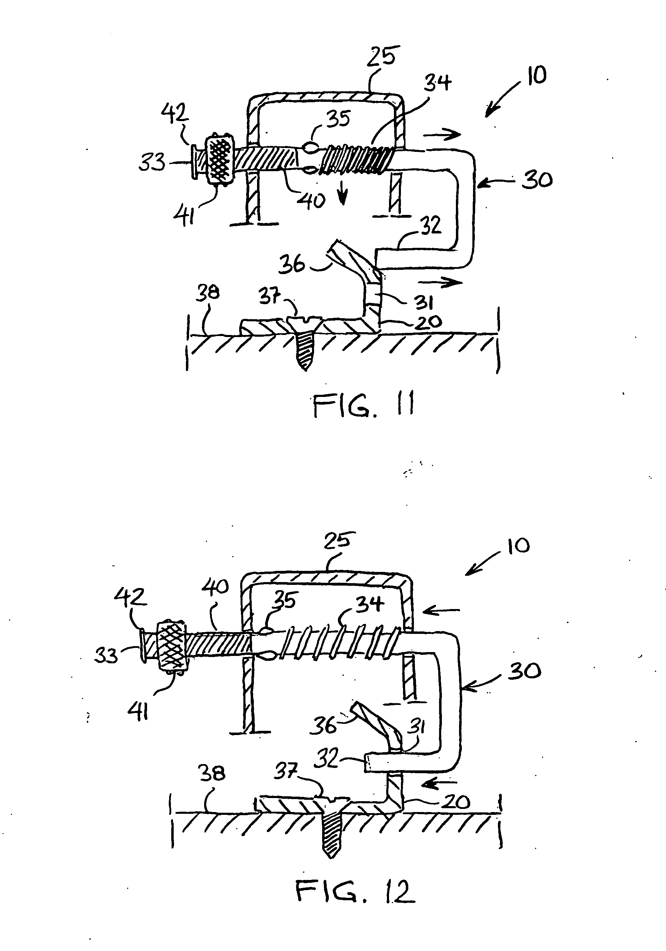

Figure 11 shows a third embodiment of the toggle latch 10 during the same latching operation as the second embodiment of the toggle latch 10 shown in Fig. 8. In the embodiment of Fig. 11, a thread 40 is arranged onto the movable portion 33 in the securing pin 30 of the toggle latch 10, with a securing nut 41 on the thread. The surface of the securing nut 41 is roughened and/or seen with small protrusions so that it can be turned by hand. At the end of the movable portion 33 of the securing pin 30, there is a widening 42 that prevents removal of the securing nut 41 from the thread 40. This widening 42 at the end of the thread 40 is most preferably made during the assembly stage of the toggle latch 10 after the securing pin 30, its coil spring 34 and the securing nut 41 have been installed in place in the latch lever 25 of the toggle latch 10.

In the latching position shown in Fig. 11, the securing nut 41 on the thread 40 of the securing pin 30 in the toggle latch 10 is turned to the left in Fig. 11, close to the end of the movable portion 33 so that it does not prevent the securing pin 30 from moving to the right in Fig. 11. As the latch lever 25 is pressed downwards in Fig. 11, the inclined portion of the protrusion 36 pushes the securing portion 32 of the securing pin 30 to the right in Fig. 11, whereby the coil spring 34 around the securing pin 30 becomes compressed.

In Figure 12, the latch lever 25 of the toggle latch 10 has been pressed so far downwards in Fig. 12 that the securing portion 32 of the securing pin 30 has moved to the aperture 31 in the body 20, after which the spring 34 has pushed the securing portion 32 of the securing pin 30 into the aperture 31. Thus the securing pin 30 has secured the toggle latch 10 in the latched position. The toggle latch 10 can now only be released by pressing the end of the movable portion of the securing pin 30 so that the securing pin 30 moves to the right in Fig. 12 and its securing portion 32 is released from the aperture 31 in the body 20.

In some situations the toggle latch 10 must be secured in the latched position in such a way that the securing pin 30 cannot be moved to the right in Fig. 12 and the toggle latch 10 cannot open by accident. Such a situation may arise in a fire, for example, when the toggle latch 10 is subjected to such an intensive heat that the coil spring 34 of the securing pin 30 looses its capability to operate normally. In such a case the securing pin 30 may be released spontaneously.

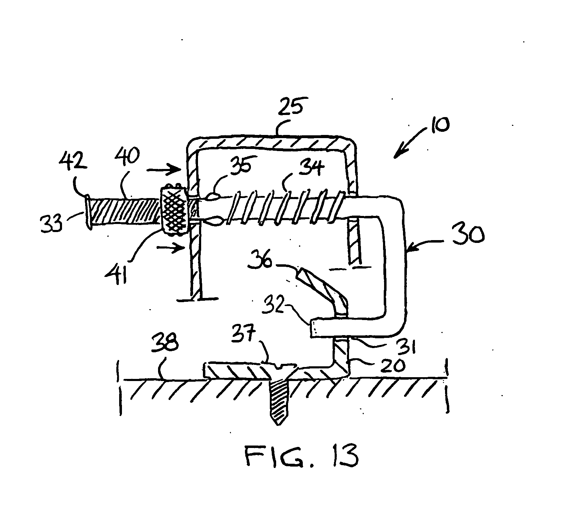

Figure 13 shows a third embodiment of the toggle latch 10 shown in Figures 11 and 12, wherein a securing nut 41 ensures that the toggle latch 10 remains safely latched even in case of a fire. To secure that the toggle latch 10 remains latched, the securing nut 41 has been turned to the right in Fig. 13, most preferably against the latch lever 25. Thus the securing pin 30 cannot move to the right in Fig. 13 and the toggle latch 10 cannot be released even in case the coil spring 34 keeping the securing pin 30 in place becomes incapacitated.

The toggle latch 10 according to the invention, described above and shown in Figures 11 through to 13, is thus very easy to use because it becomes automatically secured in the latched position only by turning the latch lever 25 of the toggle latch 10. Releasing the latch is also simple and easy, merely by pressing on the end of the movable portion 33 of the securing pin 30.
A toggle latch 10 according to the invention is very reliable because, if required, the latch can be further secured to resist even intensive heat by means of an easy-to-use securing nut 41.

### ADDITIONAL NOTES

It is obvious to a person skilled in the art that the different embodiments of the invention may vary within the scope of the claims presented below.

### LIST OF REFERENCE NUMBERS

- 10: Toggle latch
- 20: Body
- 21: Screw hole
- 22: Counterpiece
- 23: Screw hole
- 24: Joint
- 25: Latch lever
- 26: Axle
- 27: Eye bolt
- 28: Shaft
- 29: Threads
- 30: Securing pin
- 31: Securing aperture
- 32: Securing portion
- 33: Movable portion
- 34: Spring
- 35: Securing location
- 35a: Securing groove
- 35b: Securing protrusion
- 36: Protrusion
- 37: Screw
- 38: Part to be latched
- 39: Aperture
- 40: Thread
- 41: Nut
- 42: End widening

## Claims

1. A toggle latch (10) by means of which two parts, such as a casing cover and a casing body, cargo pallet sidewalls, or similar objects can be latched together, the toggle latch comprising
- a body (20) of the toggle latch (10) to be connected to the first part to be latched, the body most preferably including an adjustable eye bolt (27) or a similar arrangement,
- a counterpiece (22), such as a hook or a similar arrangement, to be connected to the other part to be latched,
- a latch lever (25) connected to the body (20) of the toggle latch (10) and to the eye bolt (27), which lever, by being turned, can latch the eye bolt with the counterpiece (22), and
- a securing aperture (31) located in the body (20) of the toggle latch (10), a securing pin (30) being located in the said aperture to prevent the latch lever (25) from turning and thus also the toggle latch from releasing,
**characterised in that**
- the latch lever (25) of the toggle latch (10) has a securing pin (30) and a spring (34), the spring force of which spring is directed at the securing pin to move it axially so that, in the latched position of the toggle latch, the securing pin secures the latch lever in the securing aperture (31) of the body (20) of the toggle latch, and
- there is an inclined surface (36) on the body (20) of the toggle latch (10), the inclined surface being so arranged that, when the latch lever (25) is turned to the latched position, the inclined surface moves the securing pin (30) against the spring force of the spring (34) and guides the securing pin into the securing aperture (31) of the body.

2. A toggle latch (10) according to claim 1, **characterised in that**
- the securing pin (30) is U-shaped and most preferably made from round steel bar, and
- the spring (34) is a coil spring, being located around the securing pin (30) and secured to the securing pin.

3. A toggle latch (10) according to any one of claims 1 or 2, **characterised in that**
- the U-shaped securing pin (30) is located in apertures of the latch lever (25) so that the ends (32, 33) of the pin's both arms protrude on the same side of the latch lever, and,
- to release the secured latch lever (25), the securing pin (30) can be moved to the side by pressing its first arm, i.e. the movable portion (33), against the spring force of the coil spring (34), whereby the other arm of the securing pin, i.e. the securing portion (32), is pushed out of the securing aperture (31) of the body (20).

4. A toggle latch (10) according to any one of claims 1, 2 or 3, **characterised in that** the coil spring (34) is secured to the securing location (35) of the securing pin (30), the securing location being a securing groove (35a) or a protrusion (35b) made by pressing.

5. A toggle latch (10) according to any one of claims 1 through to 4, **characterised in that** the toggle latch (10) and its U-shaped securing pin (30) are made of stainless steel or acid-proof steel.

6. A toggle latch (10) according to any one of claims 1 through to 5, **characterised in that** the body (20) of the toggle latch (10) has a protrusion (36) equipped with a securing aperture (31), the protrusion being shaped in such a way that, when the latch lever (25) is being latched, the securing pin (30) makes contact with the protrusion and the protrusion guides the securing pin so that the pin is secured in the securing aperture (31) of the protrusion.

7. A toggle latch (10) according to any one of claims 1 through to 6, **characterised in that th**e securing pin (30) equipped with a coil spring (34) can, during assembly, be slipped into the first aperture of the latch lever (25) and, after that, it can be turned into the other aperture (39) of the latch lever.

8. A toggle latch (10) according to any one of claims 1 through to 7, **characterised in that** the securing pin (30) is equipped with a securing member (40, 41) by which securing member the securing pin can be secured so as to be immobile.

9. A toggle latch (10) according to claim 8, **characterised in that**
- the securing member (40, 41) is a nut (41) with a roughened surface so that the nut can be turned by hand, and
- the nut can be turned on a thread arranged on the securing pin (30) so that the securing pin becomes secured and immobile.

## Patentansprüche

1. Ein Riegelspannverschluss (10), mithilfe dessen zwei Teile, wie zum Beispiel ein Gehäusekörper und ein Gehäusedeckel, Seitenwände einer Frachtpalette oder ähnliche Objekte miteinander verriegelt werden können, bestehend aus
- einem Hauptteil (20) des Riegelspannverschlusses (10), der an dem ersten der zu verbindenden Teile zu befestigen ist, wobei das Hauptteil vorzugsweise eine verstellbare Augenschraube (27) oder eine ähnliche Vorrichtung umfasst,
- einem Gegenstück (22) wie zum Beispiel einem Haken oder einer ähnlichen Vorrichtung, die an dem anderen der zu verbindenden Teile zu befestigen ist,
- einem Spannhebel (25), der am Hauptteil (20) des Riegelspannverschlusses (10) und der Augenschraube (27) befestigt ist, welcher, indem er umgelegt wird, die Augenschraube mit dem Gegenstück (22) verriegelt, und
- einer Sicherungsöffnung (31) im Hauptteil (20) des Riegelspannverschlusses (10) und einem Sicherungsstift (30) in der besagten Öffnung, um zu verhindern, dass der Spannhebel (25) sich aus seiner Position dreht und damit auch der Riegelspannverschluss gelöst wird,
**dadurch gekennzeichnet, dass**
- der Spannhebel (25) des Riegelspannverschlusses (10) einen Sicherungsstift (30) und eine Feder (34) aufweist, deren Federkraft auf den Sicherungsstift gerichtet ist, um diesen axial zu bewegen, so dass der Sicherungsstift bei verriegelter Position des Riegelspannverschlusses den Spannhebel in der Sicherungsöffnung (31) des Hauptteils (20) des Riegelspannverschlusses sichert, und
- es eine geneigte Oberfläche (36) am Hauptteil (20) des Riegelspannverschlusses (10) gibt, die so angeordnet ist, dass, wenn der Spannhebel (25) in die verriegelte Position umgelegt wird, die geneigte Oberfläche den Sicherungsstift (30) gegen die Federkraft der Feder (34) bewegt und den Sicherungsstift in die Sicherungsöffnung (31) des Hauptteils führt.

2. Ein Riegelspannverschluss (10) nach Anspruch 1, **dadurch gekennzeichnet, dass**
- der Sicherungsstift (30) U-förmig und vorzugsweise aus einem runden Stahlstab gefertigt ist, und
- die Feder (34) eine Spiralfeder ist, die um den Sicherungsstift (30) herum angebracht ist und an dem Sicherungsstift befestigt ist.

3. Ein Riegelspannverschluss (10) nach einem der Ansprüche 1-2, **dadurch gekennzeichnet, dass**
- sich der U-förmige Sicherungsstift (30) in Öffnungen des Spannhebels (25) befindet, sodass die Enden (32, 33) beider Arme des Stifts auf derselben Seite des Klinkenhebels hervorstehen, und
- dass, um den gesicherten Spannhebel (25) zu lösen, der Sicherungsstift (30) durch Drücken des ersten Arms seitlich bewegt werden kann, d. h. der bewegliche Teil (33) gegen die Federkraft der Spiralfeder (34), wobei der andere Arm des Sicherungsstifts. d. h. der Sicherungsteil (32), aus der Sicherungsöffnung (31) des Hauptteils (20) herausgedrückt wird.

4. Ein Riegelspannverschluss (10) nach einem der Ansprüche 1, 2 oder 3, **dadurch gekennzeichnet, dass** die Spiralfeder (34) am Sicherungsort (35) des Sicherungsstifts (30) gesichert ist, wobei der Sicherungsort eine Sicherungsnut (35a) oder ein durch Pressung entstandener Vorsprung (35b) ist.

5. Ein Riegelspannverschluss (10) nach einem der Ansprüche 1-4, **dadurch gekennzeichnet, dass** der Riegelspannverschluss (10) und sein U-förmiger Sicherungsstift (30) aus rostfreiem oder säurefestem Stahl hergestellt sind.

6. Ein Riegelspannverschluss (10) nach einem der Ansprüche 1-5, **dadurch gekennzeichnet, dass** das Hauptteil (20) des Riegelspannverschlusses (10) einen Vorsprung (36) hat, der mit einer Sicherungsöffnung (31) versehen ist, wobei der Vorsprung so gestaltet ist, dass, wenn der Spannhebel (25) verriegelt wird, der Sicherungsstift (30) in Kontakt mit dem Vorsprung kommt und der Vorsprung den Sicherungsstift so führt, dass der Stift in der Sicherungsöffnung (31) des Vorsprungs gesichert wird.

7. Ein Riegelspannverschluss (10) nach einem der Ansprüche 1-6, **dadurch gekennzeichnet, dass** der Sicherungsstift (30), versehen mit einer Spiralfeder (34), bei der Montage in die erste Öffnung des Spannhebels (25) eingeführt und danach in die andere Öffnung (39) des Spannhebels gedreht werden kann.

8. Ein Riegelspannverschluss (10) nach einem der Ansprüche 1-7, **dadurch gekennzeichnet, dass** der Sicherungsstift (30) mit einem Sicherungsglied (40, 41) versehen ist, durch das der Sicherungsstift so gesichert werden kann, dass er unbeweglich ist.

9. Ein Riegelspannverschluss (10) nach Anspruch 8, **dadurch gekennzeichnet, dass**
- dass das Sicherungsglied (40, 41) eine Mutter (41) mit aufgerauter Oberfläche ist, sodass die Mutter von Hand gedreht werden kann, und
- dass die Mutter auf einem an dem Sicherungsstift (30) angebrachten Gewinde gedreht werden kann, sodass der Sicherungsstift gesichert und unbeweglich wird.

## Revendications

1. Verrou à volet (10) à l'aide duquel deux parties, comme le couvercle et le corps d'un carter, les parois latérales d'une palette de chargement, ou des objets similaires peuvent être verrouillées ensemble, le verrou à volet comportant
- un corps (20) du verrou à volet (10) pour être connecté à la première partie à verrouiller, le corps de préférence incluant un boulon à oeil réglable (27) ou un arrangement similaire,
- une contrepartie (22), tel qu'un crochet ou un arrangement similaire, pour être connectée à l'autre partie à verrouiller,
- un levier de serrage (25) connecté au corps (20) du verrou à volet (10) et au boulon à oeil (27), le levier, quand il est tourné, pouvant verrouiller le boulon à oeil avec la contrepartie (22), et
- une ouverture de fixation (31) située dans le corps (20) du verrou à volet (10), une cheville de fixation (30) située dans ladite ouverture pour empêcher le levier de serrage (25) de tourner et ainsi le verrou à volet de s'ouvrir,
**caractérisé en ce que**
- le levier de serrage (25) du verrou à volet (10) a une cheville de fixation (30) et un ressort (34), la force de compression du ressort étant dirigée vers la cheville de fixation afin de la déplacer axialement de façon à ce que, dans la position verrouillée du verrou à volet, la cheville de fixation fixe le levier de serrage dans l'ouverture de fixation (31) du corps (20) du volet à verrou, et
- il y a une surface inclinée (36) sur le corps (20) du verrou à volet (10), la surface inclinée étant arrangée de façon à ce que, lorsque le levier de serrage (25) est tourné vers la position verrouillée, la surface inclinée fasse déplacer la cheville de fixation (30) contre la force de compression du ressort (34) et guide la cheville de fixation dans l'ouverture de fixation (31) du corps.

2. Verrou à volet (10) selon la revendication 1, **caractérisé en ce**
- la cheville de fixation (30) est en forme de U et, de préférence, fabriquée à partir d'une barre d'acier de section ronde, et
- le ressort (34) est un ressort hélicoïdal situé autour de la cheville de fixation (30) et fixé à la cheville de fixation.

3. Verrou à volet (10) selon l'une quelconque des revendications 1 ou 2, **caractérisé en ce**
- la cheville de fixation en forme de U (30) est située dans des ouvertures du levier de serrage (25) de façon à ce que les extrémités (32, 33) des deux dents de la cheville fassent saillie du même côté du levier de serrage, et
- pour libérer le levier de serrage fixé (25), la cheville de fixation (30) peut être déplacée vers le côté en pressant sa première dent, à savoir la portion mobile (33), contre la force de compression du ressort hélicoïdal (34), l'autre dent de la cheville de fixation, à savoir la portion de fixation (32), étant poussée hors de l'ouverture de fixation (31) du corps (20).

4. Verrou à volet (10) selon l'une quelconque des revendications 1,2 ou 3, **caractérisé en ce que** le verrou hélicoïdal (34) est fixé à l'endroit de fixation (35) de la cheville de fixation (30), l'endroit de fixation étant une rainure de fixation (35a) ou une saillie (35b) obtenue par pressage.

5. Verrou à volet (10) selon l'une quelconque des revendications 1 à 4, **caractérisé en ce que** le verrou à volet (10) et sa cheville de fixation en forme de U (30) sont fabriqués en acier inoxydable ou acier résistant aux acides.

6. Verrou à volet (10) selon l'une quelconque des revendications 1 à 5, **caractérisé en ce que** le corps (20) du verrou à volet (10) a une saillie (36) équipée d'une ouverture de fixation (31), la saillie étant formée de façon à ce que, lorsque le levier de serrage (25) est verrouillé, la cheville de fixation (30) entre en contact avec la saillie et la saillie guide la cheville de fixation de façon à fixer la cheville dans l'ouverture de fixation (31) de la saillie.

7. Verrou à volet (10) selon l'une quelconque des revendications 1 à 6, **caractérisé en ce que** la cheville de fixation (30) équipée d'un ressort hélicoïdal (34) peut, durant l'assemblage, être glissée dans la première ouverture du levier de serrage (25) et, après, elle peut être tournée dans l'autre ouverture (39) du levier de serrage.

8. Verrou à volet (10) selon l'une quelconque des revendications 1 à 7, **caractérisé en ce que** la cheville de fixation (30) est équipée d'un membre de fixation (40,41), le membre de fixation permettant d'immobiliser la cheville de fixation.

9. Verrou à volet (10) selon la revendication 8, **caractérisé en ce que**
- le membre de fixation (40, 41) est un écrou (41) avec une surface rendue rugueuse de façon à permettre de tourner l'écrou à la main, et
- l'écrou peut être tourné sur un filetage arrangé sur la cheville de fixation (30) de façon à immobiliser la cheville de fixation.
